# EUROPEAN PATENT SPECIFICATION

(11) **EP 1 661 420 B1**
(45) Date of publication and mention of the grant of the patent: **10.09.2014**
(21) Application number: 04764733.4
(22) Date of filing: 02.09.2004
(51) Int. Cl.: H04W 4/10, H04W 88/16

(54) **PUSH-TO-TALK INTERWORKING**
INTERWORKING IN EINEM DRÜCKEN-ZUM-SPRECHEN SYSTEM
INTERFONCTIONNEMENT DE MESSAGERIE VOCALE INSTANTANEE

(30) Priority: 04.09.2003 EP 03020089
(43) Date of publication of application: 31.05.2006
(73) Proprietor: Deutsche Telekom AG, 53113 Bonn (DE)
(72) Inventor: BLICKER, Stephan, 53343 Wachtberg-Villip (DE); BRITSCH, Matthias, 53639 Königswinter (DE); ESSELING, Norbert, 53229 Bonn (DE)
(74) Representative: Riebling, Peter
(86) International application number: PCT/EP2004/009774
(87) International publication number: WO 2005/025255

(56) References cited:
- EP-A1- 1 182 895
- US-A1- 2002 150 091
- US-B1- 6 304 558

## Description

The present invention relates to interworking between separate communication networks using dialled connections and especially to a push-to-talk communication method and system for enabling a subscriber to communicate with one or more subscribers of one or more communication networks without using a dialling procedure.

It is state of the art to use a dialling procedure in digital communication systems to set up a communication path between two subscribers of a communication network or two subscribers of different communication networks.

U.S. patent No. 6 304 558 B1 discloses a network dispatch management system for providing a dispatch service to dispatch clients via a packet-switched network, like the Internet. This also includes a packet-switched communication originating from a wireless communication system.

It is the object of the present invention to propose a method and a system for providing Push-to-Talk services between subscribers of different operators.

According to the invention this object is achieved by providing a method and a system as disclosed in the independent claims.

The invention provides a method for operating a push-to-talk communication between a Push-to-talk over communication system-group, PoC-group, consisting of at least of one member of a first communication network, operated by a first network operator, and a PoC-group consisting of at least of one member of a second communication network, operated by a second network operator, using a Push-to-talk over communication system application server, PoC application server, in each communication network, comprising the steps of:
- connecting the members of the PoC-group of the first network operator with the members of the PoC-group of the second network operator, by
- connecting the members of the PoC-group of the first network operator from the side of the second network operator,
- connecting the members of the PoC-group of the second network operator from the side of the first network operator,
- synchronising the PoC application servers to each other, wherein the synchronisation is carried out by the PoC application servers whenever a user requests update of all group members of the PoC groups before sending a PoC message, wherein the synchronisation takes place via a synchronisation connection between the PoC application servers, so the group members of the PoC-group of the first communication network and the PoC-group members of the second communication network are known to both network operators.

The system for push-to-talk communication between push-to-talk groups of at least two radio communication networks is characterised by one common group management system and at least one subsystem for each radio communication network consisting of at least one Push-to-Talk communication application server, wherein the Push-to-Talk communication application server is connected to an access network via an authentication and routing element.

System for push-to-talk communication between push-to-talk groups of Push-to-Talk enables a user to send a message either streamed or transferred to another user or a group of users after pressing a button or initialising a start signal in another known technique. Special actions have to be taken to organise a Push-to-Talk Group across operators.

Within the text of this patent or patent application the abbreviation "PoC" shall mean Push-to-talk over communication system.
"PoC AS" shall mean push-to-talk over Communication system application server.
"Operator" shall mean a (network) operator providing Push-to-Talk services.

A preferred embodiment of the invention provides a method for operating a push-to-talk communication between a PoC-group consisting of at least of one member of a first communication network and a PoC-group consisting of at least of one member of a second communication network, using a PoC application server in each communication network, providing the steps of connecting the members of the PoC-group of the first network operator with the members of the PoC-group of the second network operator, and synchronising the PoC application servers to each other.

A further example provides a method for push-to-talk communication between the members of an existing push-to-talk communication session and a group of an additional communication network, using a PoC application server in each communication network, providing the steps of connecting the additional group to each of the existing groups of the session, and synchronising the PoC application server of the additional group to the previously synchronised PoC application servers.

The proposed Push-to-Talk Interworking has several advantages.
The above mechanisms may be used for Push-To-Talk systems or any other system using group communication in any form. Further, the mechanisms apply to fixed/wireless and circuit/packet based communication networks.

Any address scheme, e.g. IP-address, phone numbers, SIP-URls, ULRs, email-addresses, may be used to identify the users and groups.
Dedicated signalling protocols are used to exchange information about the groups, e.g. size, member, status of the members, and, the mechanisms may be used with two or more operators simultaneously.

in the following preferred embodiments as well as further examples of the invention are described in more detail with reference to the drawings.
- Fig. 1: shows the situation when both network operators offer Push-to-Talk groups to each other
- Fig. 2: shows the situation when only operator 2 offers Push-To Talk groups to customers of operator 2 and 1
- Fig. 3: shows the push-to-Talk User Signalling/Traffic Flow (Alternative 1)
- Fig. 4: shows the Push to Talk User Signalling/Traffic Flow (Alternative 2)
- Fig. 5: shows the Push-to-Talk User Signalling/Traffic Flow (Alternative 3)

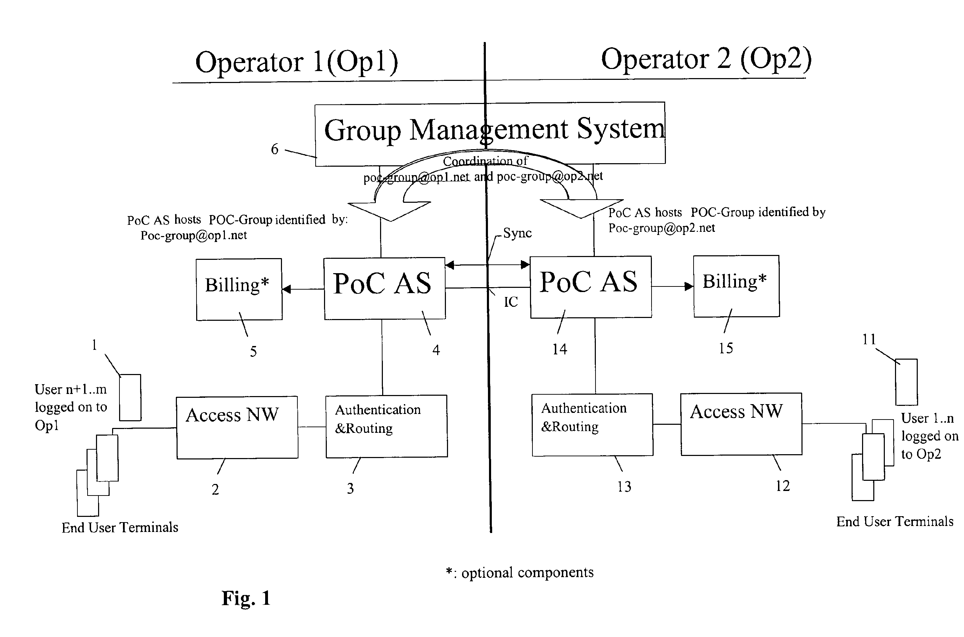

In Figure 1 the architecture is shown when two operators offer Push-to-Talk groups to each other.
On the left hand side there is shown the domain of Operator 1 (OP1). There is a number (1+n...m) of users (subscribers) with their end terminals 1 logged on to operator 1. Operator 1 preferably operates his own access network 2 to provide access to his telecommunication services. There is preferably an authentication and routing element 3 which authenticates the users and routes the connection to the required services and/or destinations.
According to the invention operator 1 provides a PoC application server 4 (PoC AS) which hosts a Push-to-Talk group which is identified for example by the address "poc-group@op1.net". The users 1+n...m can be member of this Push-to-Talk group. There may also be a billing facility 5 to charge the utilised communication services to the users.

On the right hand side there is shown the domain of Operator 2 (OP2). There is a number (1...n) of users (subscribers) with their end terminals 11 logged on to operator 2. Operator 2 may operate an access network 12 to provide access to his telecommunication services. There also can be an authentication and routing element 13 which authenticates the users and routes the connection to the required services and/or destinations. According to the invention operator 2 also provides an PoC application server 14 (PoC AS) which hosts a Push-to-Talk group which is identified for example by the address "poc-group@op2.net". The users 1...n can be member of this Push-to-Talk group. There may also be a billing facility 15 to charge the required communication services to the users.
The PoC application server 4 of operator 1 is connected via a synchronisation connection (sync) and interworking connection (IC) with the PoC application server 14 of operator 2.

The coordination of both Push-to-Talk groups, i.e. "poc-group@op1.net" and poc-group@op2.net, is managed by a common group management system 6.

Operator1 and Operator2 negotiate an agreement, that Operator2 is allowed to offer the Push-to-Talk group "poc-group@op2.net" and Operator1 is allowed to offer the Push-to-Talk group poc-group@op1.net to the other operator, respectively.
Accordingly, the users n+1 to m join the group poc-group@op2.net from Op1 side and the users 1 to n join the group poc-group@op1.net from Op2 side.

Via the synchronisation connection a synchronisation takes place between Operator1 and Operator2 PoC application servers 4 and 14, so the group members of poc-group@op1.net and poc-group@op2.net are known to both operators, i.e. operator 2 and Operator1.

The synchronisation is carried out automatically by the PoC application servers 4 and 14. There may also be a synchronisation whenever a user requests update of all group members of poc-group@op1.net and poc-group@op2.net before sending a PoC message.

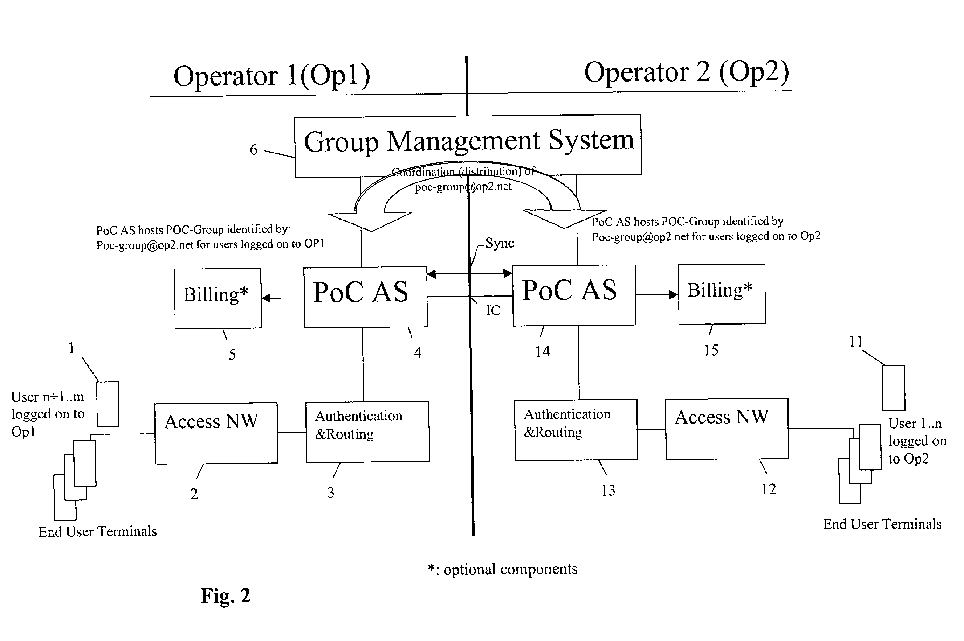

Figure 2 shows an identical architecture as Figure 1. In the depicted situation only operator 2 offers Push-To-Talk groups to customers of both operator 2 and 1.
Operator1 and Operator2 negotiate an agreement that Operator2 is allowed to offer the group poc-group@op2.net.
Accordingly, users n+1...m join the operators 2 group poc-group@op2.net from Op1 side and user 1 to n join the same group poc-group@op2.net from Op2 side.
A synchronisation takes place between Operator1 and Operator2 PoC application servers 4 and 14, so the group members of poc-group@op2.net are known to both Operator1 and Operator2, that is the group members of poc-group@op1.net are only known to operator 1 but not to operator 2.

The synchronisation takes place automatically by the PoC application servers 4 and 14 and also in case a user requests update of all group members before sending a PoC message.

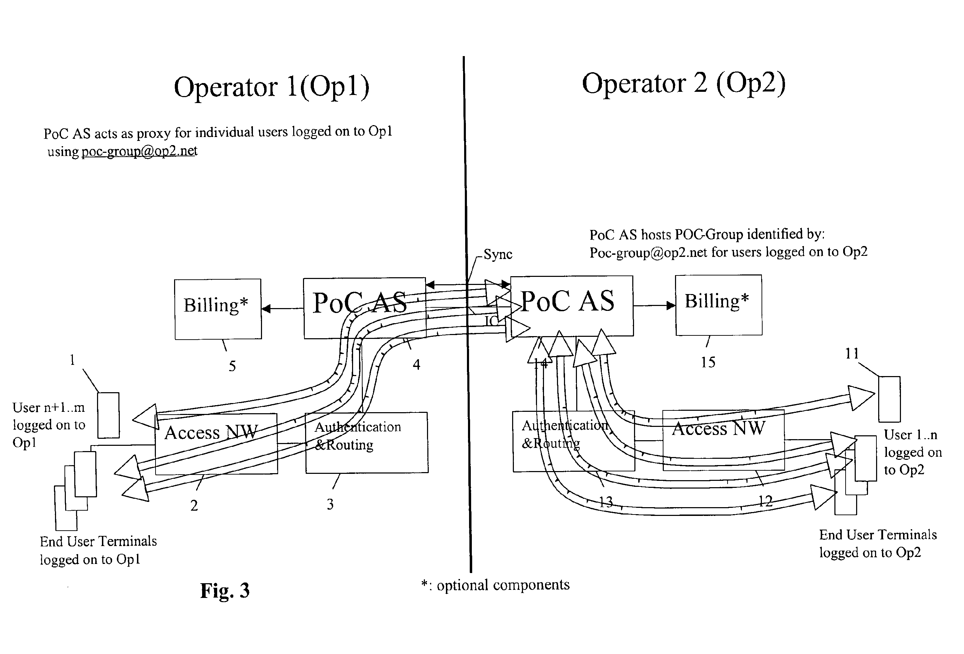

Figure 3 shows the push-to-Talk User Signalling/Traffic Flow according to a first alternative. Only OP2 is allowed to offer his group poc-group@op2.net to Op1.

A user m with his terminal 1 logged to Op1 presses for example a special PoC button on his terminal. It is assumed that all or parts of the members of the poc-group@op2.net are known/not known in the Op1 PoC application server due to synchronisation/request mechanism.

The messages are terminated towards all users logged on to Op1 (except user m) and to the users of the group logged on to Op2.

The PoC application server 4 in connection with the billing facility 5 may generate billing records and Interconnection (IC) records for accounting.
The PoC AS 4 of Op1 acts as proxy for a single user m of poc-group@op2.net logged on to the operator 1 network and contact the PoC application server 14 for the group poc-group@op2.net located at operator 2.
The PoC application server 14 of Operator 2 may be identified by a address derived from the group address, i.e. ". ...op2.net".

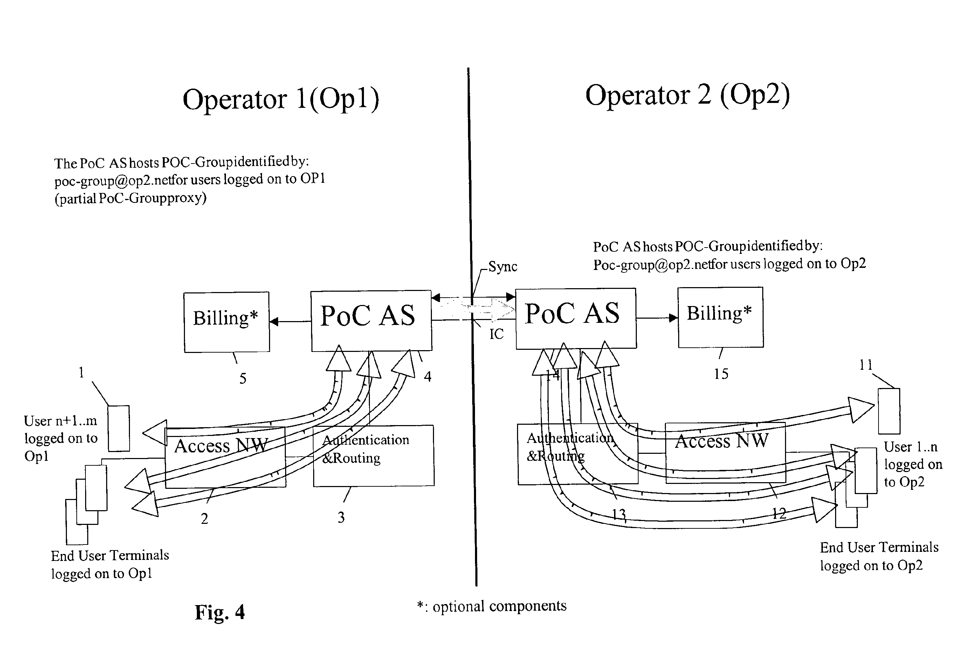

Fig. 4 shows the Push to Talk User Signalling/Traffic Flow according to a second alternative. Only OP2 is allowed to offer his group poc-group@op2.net to Op1.

A user m with his terminal 1 logged to Op1 presses for example a special PoC button on his terminal, and all or parts of the members of the poc-group@op2.net are known/not known in the Op1 PoC application server 4 due to synchronisation/request mechanism.

The messages are terminated towards all users logged on to Op1 (except user m) and to the users of the group logged on to Op2.

The PoC application server 4 in connection with the billing facility 5 may generate billing records and Interconnection (IC) records for accounting.

The PoC AS 4 of Op1 acts as proxy for a single user of poc-group@op2.net logged on to the operator1 network and contact the PoC application server 14 for the group located at operator2.

The PoC AS may also act as partial PoC group server (partial group proxy) for all users of poc-group@op2.net logged on to the operator1 network and contact the PoC server 14 for the group poc-group@op2.net. The traffic between the servers 4 and 14 may be a server-server connection combining the traffic of the partial groups.

The server of Operator2 may be identified by an address derived from the group address, i.e., "....op2.net".

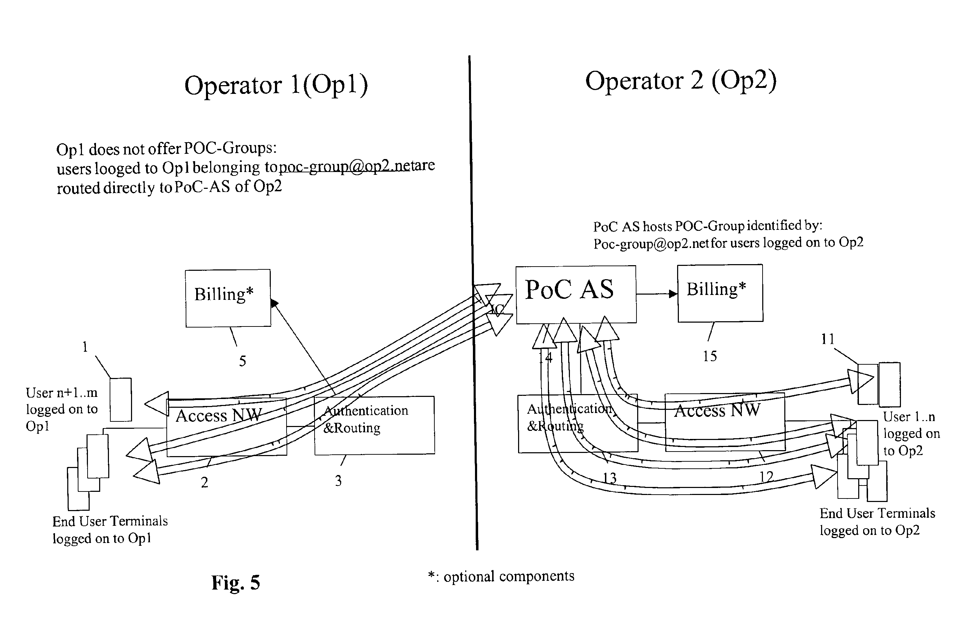

Fig. 5 shows the Push-to-Talk User Signalling/Traffic Flow according to a third alternative. OP2 is allowed to offer his group poc-group@op2.net to Op1 and users of Op1 are allowed to use it.

A user m with his terminal 1 logged to Op1 presses for example a special PoC button on his terminal, the message is directly routed to the PoC application server 14 of Operator2.

The messages are terminated towards all users logged on to Op1 (except user m) and to the users of the group logged on to Op2.

The PoC application server 4 in connection with the billing facility 5 may generate billing records and Interconnection (IC) records for accounting.

The PoC application server 14 of Operator2 may be identified by a address derived from the group address.

### List of Reference Numerals and Abbreviations

- 1: Communication terminal
- 2: Access Network
- 3: Authentication and routing element
- 4: PoC application server
- 5: Billing facility
- 6: Group management system

- 11: Communication terminal
- 12: Access Network
- 13: Authentication and routing element
- 14: PoC application server
- 15: Billing facility

- PoC: push-to-talk over Communication System
- PoC AS: push-to-talk over Communication System Application Server
- Op1: Operator 1
- Op2: Operator 2

## Claims

1. Method for operating a push-to-talk communication between a Push-to-talk over communication system-group, PoC-group, consisting of at least of one member (1) of a first communication network (2), operated by a first network operator, and a PoC-group consisting of at least of one member (11) of a second communication network (12), operated by a second network operator, using a Push-to-talk over communication system application server (4; 14), PoC application server, in each communication network (2; 12), comprising the steps of:
- connecting the members (1) of the PoC-group of the first network operator with the members (11) of the PoC-group of the second network operator, by
- connecting the members (1) of the PoC-group of the first network operator from the side of the second network operator,
- connecting the members (11) of the PoC-group of the second network operator from the side of the first network operator,
- synchronising the PoC application servers (4; 14) to each other, wherein the synchronisation is carried out by the PoC application servers (4; 14) whenever a user requests update of all group members (1; 11) of the PoC groups before sending a PoC message, wherein the synchronisation takes place via a synchronisation connection between the PoC application servers (4;14), so the group members (1) of the PoC-group of the first communication network (2) and the PoC-group members (11) of the second communication network (12) are known to both network operators.

2. System for push-to-talk communication between push-to-talk groups of at least two radio communication networks (2; 12) for carrying out a method according to claim 1, comprising one common group management system (6) and at least one subsystem for each radio communication network (2; 12) consisting of at least one Push-to-Talk communication application server (4, 14), wherein the Push-to-Talk communication application server (4; 14) is connected to an access network (2; 12) via an authentication and routing element (3; 13).

## Patentansprüche

1. Verfahren zum Betreiben einer Push-to-Talk-Kommunikation zwischen einer Push-to-Talk-over-Cellular-Kommunikations-System-Gruppe, PoC-Gruppe, die aus mindestens einem Mitglied (1) eines ersten Kommunikationsnetzes (2), das von einem ersten Netzbetreiber betrieben wird, und einer PoC-Gruppe besteht, die aus mindestens einem Mitglied (11) eines zweiten Kommunikationsnetzes (12) besteht, das von einem zweiten Netzbetreiber betrieben wird, der in jedem Kommunikationsnetz (2; 12) einen Push-to-Talk-over-Cellular-Kommunikationssystem-Application-Server (4; 14), PoC-Application-Server, einsetzt, umfassend die folgenden Schritte:
- Verbinden der Mitglieder (1) der PoC-Gruppe des ersten Netzbetreibers mit den Mitgliedern (11) der PoC-Gruppe des zweiten Netzbetreibers durch
- Verbinden der Mitglieder (1) der PoC-Gruppe des ersten Netzbetreibers von der Seite des zweiten Netzbetreibers aus,
- Verbinden der Mitglieder (11) der PoC-Gruppe des zweiten Netzbetreibers von der Seite des ersten Netzbetreibers aus,
- Synchronisieren der PoC-Application-Server (4; 14) miteinander, wobei die Synchronisation immer dann von den PoC-Application-Servern (4; 14) durchgeführt wird, wenn ein Benutzer eine Aktualisierung aller Gruppenmitglieder (1; 11) der PoC-Gruppen anfordert, bevor er eine PoC-Nachricht sendet, wobei die Synchronisation über eine Synchronisationsverbindung zwischen den PoC-Application-Servern (4; 14) erfolgt, so dass die Gruppenmitglieder (1) der PoC-Gruppe des Kommunikationsnetzes (2) und die Gruppenmitglieder (11) des zweiten Kommunikationsnetzes (12) beiden Netzbetreibern bekannt sind.

2. System für eine Push-to-Talk-Kommunikation zwischen Push-to-Talk-Gruppen von mindestens zwei Funkkommunikationsnetzen (2; 12) zum Durchführen eines Verfahrens gemäß Anspruch 1, umfassend
ein gemeinsames Gruppenmanagementsystem (6) und mindestens ein Untersystem für jedes Funkkommunikationsnetz (2; 12), das aus mindestens einem Push-to-Talk-Kommunikations-Application-Server (4; 14) besteht, wobei der Push-to-Talk-Kommunikations-Application-Server (4; 14) über ein Authentifizierungs- und Routing-Element (3; 13) mit einem Zugangsnetz (2; 12) verbunden ist.

## Revendications

1. Procédé pour mettre en oeuvre une communication par messagerie vocale instantanée entre un groupe de messagerie vocale instantanée par système de communication, groupe PoC, composé d'au moins un membre (1) d'un premier réseau de communication (2) exploité par un premier opérateur de réseau, et un groupe PoC composé d'au moins un membre (11) d'un second réseau de communication (12) exploité par un second opérateur de réseau, à l'aide d'un serveur d'application de messagerie vocale instantanée par système de communication (4 ; 14), serveur d'application PoC, dans chaque réseau de communication (2 ; 12), comprenant les étapes qui consistent :
- à connecter les membres (1) du groupe PoC du premier opérateur de réseau aux membres (11) du groupe PoC du second opérateur de réseau,
- en connectant les membres (1) du groupe PoC du premier opérateur de réseau à partir du côté du second opérateur de réseau,
- en connectant les membres (11) du groupe PoC du second opérateur de réseau à partir du premier opérateur de réseau,
- à synchroniser les serveurs d'application PoC (4 ; 14) entre eux, étant précisé que la synchronisation est effectuée par les serveurs d'application PoC (4 ; 14) à chaque fois qu'un utilisateur demande une actualisation de tous les membres (1 ; 11) des groupes PoC avant d'envoyer un message PoC, et que la synchronisation a lieu par l'intermédiaire d'une connexion de synchronisation entre les serveurs d'application PoC (4 ; 14), de sorte que les membres (1) du groupe PoC du premier réseau de communication (2) et les membres (11) du groupe PoC du second réseau de communication (12) sont connus des deux opérateurs.

2. Système pour une communication par messagerie vocale instantanée entre des groupes d'au moins deux réseaux de communication radio (2 ; 12) pour mettre en oeuvre un procédé selon la revendication 1, comprenant
un système commun de gestion de groupes (6) et au moins un sous-système pour chaque réseau de communication radio (2 ; 12) composé d'au moins un serveur d'application de messagerie vocale instantanée (4 ; 14), étant précisé que le serveur d'application de messagerie vocale instantanée (4 ; 14) est connecté à un réseau d'accès (2 ; 12) par l'intermédiaire d'un élément d'authentification et de routage (3 ; 13).
